# EUROPEAN PATENT SPECIFICATION

(11) **EP 3 601 465 B1**
(45) Date of publication and mention of the grant of the patent: **03.03.2021**
(21) Application number: 18720663.6
(22) Date of filing: 26.03.2018
(51) Int. Cl.: C09J 153/00, C08L 23/22, C08L 23/20

(54) **ADHESIVE COMPRISING POLYISOBUTYLENE POLYMER AND STYRENE ISOBUTYLENE BLOCK COPOLYMER**
KLEBSTOFF MIT POLYISOBUTYLENPOLYMER UND STYROLISOBUTYLENBLOCKCOPOLYMER
ADHÉSIF COMPRENANT UN POLYMÈRE DE POLYISOBUTYLÈNE ET UN COPOLYMÈRE SÉQUENCÉ DE STYRÈNE-ISOBUTYLÈNE

(30) Priority: 31.03.2017 US 201762479527 P
(43) Date of publication of application: 05.02.2020
(73) Proprietor: 3M Innovative Properties Company, St. Paul, MN 55133-3427 (US)
(72) Inventor: SAHNI, Vasav, Saint Paul, MN 55133-3427 (US); CLAPPER, Jason D., Saint Paul, MN 55133-3427 (US); JOHNSON, Jacob P., Saint Paul, MN 55133-3427 (US); ZHANG, Ying, Saint Paul, MN 55133-3427 (US)
(74) Representative: Mathys & Squire
(86) International application number: PCT/IB2018/052053
(87) International publication number: WO 2018/178850

(56) References cited:
- EP-A1- 1 900 771
- WO-A1-2005/059054
- WO-A1-2011/017298

## Description

### Summary

In one embodiment, an adhesive composition is described comprising a polyisobutylene polymer component, a styrene-isobutylene block copolymer, and optionally a tackifier. The polyisobutylene polymer component comprises one or more polyisobutylene polymers. The polyisobutylene polymer component has an average weight average molecular weight ranging from 15,000 g/mole to 300,000 g/mole. The weight ratio of block copolymer to polyisobutylene polymer of the adhesive composition is greater than 2.2:1. In some embodiments, the adhesive composition is a pressure sensitive adhesive. WO2011/017298A1 discloses pressure sensitive adhesives comprising a polyisobutylene and a styrene butadiene or a styrene isoprene block copolymer.

### Detailed Description

Presently described is an adhesive composition comprising a polyisobutylene polymer component. The polyisobutylene polymer component comprises one or more polyisobutylene polymers. Such polyisobutylene polymers may be homopolymers and/or copolymers. Unless specified otherwise, as used herein "polyisobutylene polymer" refers to both the homopolymer and copolymer.

In some embodiments, the adhesive composition is a pressure sensitive adhesive.

Pressure sensitive adhesives are often characterized as having a storage modulus (G') at the application temperature, typically room temperature (e.g. 25°C), of less than 3 x 10⁵ Pa (0.3 MPa) at a frequency of 1 Hz. As used herein, storage modulus (G') refers to the value obtained utilizing Dynamic Mechanical Analysis (DMA) per the test method described in the examples. In some embodiments, the pressure sensitive adhesive composition has a storage modulus of less than 2 x 10⁵ Pa, 1 x 10⁵ Pa, 9 x 10⁴ Pa, 8 x 10⁴ Pa, 7 x 10⁴ Pa, 6 x 10⁴ Pa, 5 x 10⁴ Pa, 4 x 10⁴ Pa, or 3 x 10⁴ Pa. In some embodiments, the composition has a storage modulus (G') of at least 2.0 x 10⁴ Pa or 2.5 x 10⁴ Pa.

Pressure sensitive adhesives are often characterized as having a glass transition temperature "Tg" below 25°C; whereas other adhesives may have a Tg of 25°C or greater, typically ranging up to 50°C. As used herein, Tg refers to the value obtained utilizing DMA per the test method described in the examples. In some embodiments, the pressure sensitive adhesive composition has a Tg no greater than 20°C, 15°C, 10°C, 5°C, 0°C, or -5°C. The Tg of the pressure sensitive adhesive is typically at least -40°C, -35°C, - 30°C, -25°C, or -20°C.

Pressure sensitive adhesive are often characterized as having adequate adhesion. In some embodiments, the peel adhesion (e.g. to stainless steel), as measured according to the test method described in the examples, is at least 0.1, 0.5, 1, 2, 3, 4, or 5 N/dm ranging up to for example 15, 16, 17, 18, 19, or 20 N/dm.

In some embodiments, the polyisobutylene polymer component comprises a polyisobutylene polymer comprising at least 90, 91, 92, 93, 94, 95, 96, 97, 98, or 99 mole-% of polymerized units of isobutylene.

In other embodiments, the polyisobutylene polymer component comprises a polyisobutylene copolymer that comprises at least 50, 55 or 60 mole-% of polymerized units of polyisobutylene. In some embodiments, the copolymer further comprises polymerized units derived from 1-butene and/or 2-butene. The polymerized units derived from 1-butene and/or 2-butene are typically present in an amount of at least 1, 5, 10, 15 or 20 mole-% ranging up to 30, 35, 40, 45 or 50 wt.-% of the polyisobutylene copolymer. Polyisobutylene copolymers further comprising polymerized units derived from 1-butene and/or 2-butene may be characterized as "polybutene".

The polyisobutylene polymer component may contain at least two polymers where the first polyisobutylene polymer comprises a higher concentration of polymerized units derived from 1-butene and/or 2-butene than the second polyisobutylene polymer.

Other examples polyisobutylene copolymers include copolymers of isobutylene and isoprene, copolymers of isobutylene and butadiene, and halogenated butyl rubbers obtained by brominating or chlorinating these copolymers. However, the polyisobutylene copolymers can be free of halogenated butyl rubbers, the halogen (e.g. chroride, bromide) content being less than 1, 0.5, 0.25, 0.1, 0.01, or 0.001 mole percent of the polyisobutylene polymer.

The polyisobutylene copolymer typically does not contain a structural unit derived from styrene. Further, the polyisobutylene copolymers are typically random copolymers. Such characteristic(s) distinguish polyisobutylene copolymer from the styrene isobutylene block copolymer component.

Thus, depending on the selection of polyisobutylene polymer(s), the polyisobutylene polymer component comprises at least 50, 55, 60, 65, 70, 75, 80, 85, 90, 95 wt.-% or greater of polymerized units of polyisobutylene.

Polyisobutylene polymer(s) can contain a trace amount of C8-C28 oligomers. The concentration of such is generally less than 0.15, 0.10, or 0.05 wt.-% based on the total weight of the polyisobutylene polymer.

It is appreciated that the polyisobutylene polymer(s) may have a very small concentration of reactive double bonds or other functional groups that are residual of the polymerization method of making the polyisobutylene polymer. The concentration of such reactive double bonds or other functional groups is typically less than 5, 4, 3, or 2 mole %.

Polyisobutylene polymer(s) typically have a density of 0.92 g/cc. However, depending on the content of 1-butene and/or 2-butene and/or other alkene comonomer(s), the density may be 0.91 or lower. Further, the glass transition temperature of such polymers is typically -64°C to -65°C as measured by Differential Scanning Calorimetry (DSC). Polyisobutylene polymer(s) typically cold flow at room temperature.

Polyisobutylene polymers are commercially available from several manufacturers. Homopolymers are commercially available, for example, under the trade designation OPPANOL (e.g., OPPANOL B12, B15, B30, B50, B80, B100, B150, and B200) from BASF Corp. (Florham Park, N.J.). These polymers often have a weight average molecular weight in the range of about 40,000 to 1,000,000 g/mole or greater. Still other polyisobutylene polymers are commercially available in a wide range of molecular weights from United Chemical Products (UCP) of St. Petersburg, Russia; Exxon Chemical Company as the trade designation VISTANEX™; and B.F. Goodrich as the trade designation "Hycar".

The polyisobutylene polymer component comprises one or more polyisobutylene polymers such that the polyisobutylene polymer component has an average weight average molecular weight (Mw) ranging from 15,000 g/mole to 300,000 g/mole. As used herein, all weight-average molecular weights are based on Gel Permeation Chromatography (GPC) utilizing polystyrene standards, per the test method described in the examples.

In some embodiments, the polyisobutylene polymer component has a weight average molecular weight of at least 25,000; 30,000; 35,000; 40,000; 45,000; or 50,000 g/mole. In some embodiments, the polyisobutylene polymer component has a weight average molecular weight of no greater than 250,000; 200,00; 150,000; or 100,000 g/mole.

In some embodiments, the polyisobutylene component comprises a single polyisobutylene polymer. When the polyisobutylene component includes a single polyisobutylene polymer, the weight average molecular weight of the single polyisobutylene polymer is the same as the average weight average molecular weight of the polyisobutylene polymer component, as just described. Thus, the polyisobutylene component comprises a single "medium" or "intermediate" molecular weight polyisobutylene polymer.

In other embodiments, the polyisobutylene component includes a blend of two or more polyisobutylene polymers, wherein each polyisobutylene polymer has a different weight average molecular weight (Mw). For example, in some embodiments, the polyisobutylene component includes a blend of a low molecular weight polyisobutylene polymer (i.e. Mw is less than 15,000 g/mole) and an intermediate molecular weight polyisobutylene polymer. In other embodiments, the polyisobutylene component includes a blend of a higher molecular weight polyisobutylene polymer (i.e. Mw greater than 300,000 g/mole) and an intermediate molecular weight polyisobutylene polymer. In yet another embodiment, the polyisobutylene component includes a blend of a higher molecular weight polyisobutylene polymer (i.e. Mw greater than 300,000 g/mole) and a lower molecular weight polyisobutylene polymer (i.e. Mw is less than 15,000 g/mole).

When the polyisobutylene component includes two or more polyisobutylene polymers, the average weight average molecular weight of the component can be approximated by the summation of the average molecular weight of each polyisobutylene polymer multiplied by the weight fraction of each polyisobutylene polymer within the polyisobutylene component. For example, if the polyisobutylene component contains 75 wt.-% of a first polyisobutylene polymer having a weight average molecular weight of 75,000 and 25 wt.-% of a second polyisobutylene polymer having a weight average molecular weight of 950 g/mole, the average weight average molecular weight can be approximated as 75,000 X 0.75 + 950 X 0.25 = 56,488 g/mole.

In some embodiments, the polyisobutylene component comprises one or more low molecular weight polyisobutylene polymers having a weight average molecular weight less than 15,000 g/mole. The low molecular weight polyisobutylene polymers typically have a weight average molecular weight of at least 100, 200, 300, 400, or 500 g/mole. In some embodiments, the weight average molecular weight is less than 15,000; 10,000; 5,000; 4,000; 3,000; 2,000; or 1,000 g/mol. Such polyisobutylene polymers may comprise a higher concentration of polymerized units derived from 1-butene and/or 2-butene, as previously described. Thus, the density of the low molecular weight polyisobutylene polymers can be less 0.92, 0.91, 0.90 g/cc, and may be for example 0.89 g/cc. Exemplary low molecular weight polyisobutylene (also referred to an polybutene) polymers are commercially available from Dowpol Chemical, Shanghai, China. Low molecular weight homopolymers are also commercially available from BASF (e.g., OPPANOL B10).

The polyisobutylene polymer component provides the desired water vapor transmission rate (WVTR) properties. In some embodiments, the WVTR of a 51 micron adhesive layer is less than 20 or 15 or 10 grams/square meter/day (g/sq.m/day) at 40°C and 100% relative humidity. In other words the WVTR can at least 0.2, 0.25, 0.3, 0.35, or 0.4 g/sq.m/day per micron thickness of adhesive.

The adhesive composition further comprises a block copolymer comprising styrene end blocks and a saturated butylene-containing midblock. The block copolymer component typically comprises a styrene-isobutylene-styrene triblock copolymer (SIBS). The block copolymer component may further comprise styrene-isobutylene diblock copolymer (SIB).

The weight average molecular weight (Mw) of the styrene-isobutylene block copolymer is typically at least 10,000; 15,000; 20,000; 25,000; or 30,000 g/mole. The weight average molecular weight (Mw) of the styrene-isobutylene block copolymer is typically no greater than 200,000 g/mole. In some embodiments, the weight average molecular weight (Mw) is no greater than 175,000; 150,000; 125,000; or 100,000 g/mole.

The styrene content of the styrene-isobutylene block copolymer is preferably at least 10 or 15 wt.-% styrene ranging up to 30, 35, 40, 45 or 50 wt.-% styrene, based on the total weight of the styrene-isobutylene block copolymer.

In order for the adhesive composition to provide a desirably high creep compliance the amount of styrene-isobutylene block copolymer is greater than the amount of polyisobutylene polymer. The creep compliance is preferably less than 1.5 X 10⁻⁴ 1/Pa (i.e. 1.5 E-04 1/Pa) at 25°C, measured 287 seconds after a stress of 8,000 Pa was applied for 5 minutes as determined by the test method described in the examples. The lower the creep compliance, the greater the cohesive strength. In some embodiments, the creep compliance is less than 1 E-04 1/Pa, or less than 9 E-05 1/Pa, or less than 8 E-05 1/Pa, or less than 7 E-05 1/Pa, or less than 6 E-05 1/Pa, or less than 5 E-05 1/Pa, or less than 4 E-05 1/Pa, or less than 3 E-05 1/Pa, or less than 2 E-05 1/Pa, or less than 1 E-05 1/Pa. The creep compliance is typically at least 1 E-08 1/Pa, 1 E-07 1/Pa, or 1 E-06 1/Pa.

In favored embodiments, the weight ratio of styrene-isobutylene block copolymer to polyisobutylene polymer component is at least 2.2:1 and is some embodiments at least 2.3:1, 2.4:1, 2.5:1, 2.6:1, 2.7:1, 2.8:1, 2.9:1, or 3:1. When the polyisobutylene component comprises a single medium molecular weight polymer as previously described the weight ratio is typically no greater than 5:1 or 4.5:1, or 4:1. However, when the polyisobutylene component comprises a low molecular weight polyisobutylene polymer in combination with a medium or high molecular weight polymer as previously described, the weight ratio may be higher and can be at least 5:1, 5.5:1, 6:1, 6.5:1, 7:1, 7.5:1, 8:1, 8.5:1, 9:1, 9.5:1, or 10:1. In some embodiments, the weight ratio of styrene-isobutylene block copolymer to polyisobutylene polymer component is no greater than 20:1, 19:1, 18:1, 17:1, 16:1 or 15:1.

In some embodiments, the adhesive composition comprises at least 1, 2, 3, 4, 5, 6, 7, 8, 9, 10, 11, 12, 13, 14, 15, 16, 17, 18, 19 or 20 wt.-% of polyisobutylene polymer component. In some embodiments, the adhesive composition comprises no greater than 40, 35, or 30 wt.-% of polyisobutylene polymer component.

In some embodiments, the adhesive composition comprises at least 10, 15, 20, 25, 30, 35, 40, 45, or 50 wt.-% of styrene-isobutylene block copolymer component. In some embodiments, the adhesive composition comprises no greater than 95, 90, 85, 80, 75, or 70 wt.-% of styrene-isobutylene block copolymer component (SIBS) block copolymer.

The adhesive composition may optionally comprise one or more additives such as tackifiers, plasticizers (e.g. oils, polymers that are liquids at 25°C), antioxidants (e.g., hindered phenol compounds, phosphoric esters, or derivatives thereof), ultraviolet light absorber (e.g., benzotriazole, oxazolic acid amide, benzophenone, or derivatives thereof), in-process stabilizers, anti-corrosives, passivation agents, light stabilizers, processing assistants, elastomeric polymers (e.g. other block copolymers), scavenger fillers, nanoscale fillers, transparent fillers, desiccants, crosslinkers, pigments, etc. The total concentration of such additives ranges from 0-60 wt.-% of the total adhesive composition.

The adhesive composition optionally comprises a tackifier. In some embodiments the adhesive composition comprises a tackifier. The concentration of tackifier can vary depending on the intended (e.g. pressure sensitive) adhesive composition. In some embodiments, the amount of tackifier is at least 1, 2, 3, 4, 5, 6, 7, 8, 9, 10, 11, 12, 13, 14, 15 wt.-%. The maximum amount of tackifier is typically no greater than 60, 55, 50, 45, 40, 35, or 30 wt.-%. Increasing the (e.g. solid at 25°C) tackifier concentration typically raises the Tg of the adhesive. In other embodiments, the adhesive composition comprises little or no tackifier. Thus, the concentration of tackifier is less than 5, 4, 3, 2, 1, 0.5, or 0.1 wt.-%.

The tackifier can have any suitable softening temperature or softening point. The softening temperature is often less than 200°C, less than 180°C, less than 160°C, less than 150°C, less than 125°C, or less than 120°C. In applications that tend to generate heat, however, the tackifier is often selected to have a softening point of at least 75°C. Such a softening point helps minimize separation of the tackifier from the rest of the adhesive composition when the adhesive composition is subjected to heat such as from an electronic device or component. The softening temperature is often selected to be at least 80°C, at least 85°C, at least 90°C, or at least 95°C. In applications that do not generate heat, however, the tackifier can have a softening point less than 75°C.

Suitable tackifiers include hydrocarbon resins and hydrogenated hydrocarbon resins, e.g., hydrogenated cycloaliphatic resins, hydrogenated aromatic resins, or combinations thereof. Suitable tackifiers are commercially available and include, e.g., those available under the trade designation ARKON (e.g., ARKON P or ARKON M) from Arakawa Chemical Industries Co., Ltd. (Osaka, Japan); those available under the trade designation ESCOREZ (e.g., ESCOREZ 1315, 1310LC, 1304, 5300, 5320, 5340, 5380, 5400, 5415, 5600, 5615, 5637, and 5690) from Exxon Mobil Corporation, Houston, TX; and those available under the trade designation REGALREZ (e.g., REGALREZ 1085, 1094, 1126, 1139, 3102, and 6108) from Eastman Chemical, Kingsport, TN. The above tackifiers may be characterized as midblock tackifiers, being compatible with the isobutylene block of the styrene-isobutylene block copolymer as well as the polyisobutylene polymer. In some embodiments, the adhesive may comprise an endblock aromatic tackifier that is compatible with the styrene block of the block copolymer.

In some embodiments, the adhesive composition comprises an ultraviolet absorber (UVA) (e.g., benzotriazole) at a concentration of at least 1, 1.5, 2, 2.5, 3, 3.5, 4, 4.5, or 5 wt.-% of the adhesive composition. The concentration of the ultraviolet absorber (e.g., benzotriazole) is typically no greater than 15, 14, 13, 12, or 10 wt.-%. In some embodiments, the inclusion of the ultraviolet absorbent (e.g., benzotriazole) can reduce the transmission (e.g. of a 51 microns thick adhesive layer) at 380 and 385 nm to less than 20, 15, 10, 9, 8, 7, 6, 5, 4, 3, or 2%. In other words, the transmission can be less than 0.4%, 0.3%, 0.2%, 0.1%, 0.09%, 0.08%, 0.07%, 0.06%, 0.05% or 0.04% per micron thickness of adhesive. It has been found that relatively high concentrations of UVAs can be included without increasing yellowing, as indicated by the b* value, as measured according to the test method described in the example. In some embodiments, the b* values of a 51 microns thick layer of the adhesive is preferably less than 2, 1.5, 1 or 0.5 initially and after aging at 66°C and 80% relative humidity for 72 hours. In otherwords the b* values can be less than 0.04, 0.03, 0.02, or 0.01 per micron thickness of adhesive.

When it is desired for the adhesive composition to be transparent, the adhesive is typically free of fillers having a particle size greater than 100 nm that can detract from the transparency of the adhesive composition. In this embodiment, the total amount of filler of the adhesive composition is no greater than 10, 9, 8, 7, 6, 5, 4, 3, or 2 wt.-% solids of the adhesive composition. In some favored embodiments, the adhesive composition comprises no greater than 1, 0.5, 0.1, or 0.05 wt.-% of filler.

However, in other embodiments, the adhesive composition may comprise higher amounts of inorganic oxide filler such as fumed silica.

In some embodiments, the adhesive compositions are prepared by dissolving the polyisobutylene polymer, styrene-isobutylene block copolymer, and other optional components in an organic solvent. Suitable solvents include for example alkanes, ethyl acetate, toluene and tetrahydrofuran. In other embodiments, the adhesive composition may be characterized as hot-melt adhesive. Such adhesive composition are typically applied from the melt and are solvent-free. Alternatively, a solidified hot melt or dried solvent based adhesive may be applied to a substrate or between substrates. The adhesive may be heated after application to the substrate as will subsequently be described.

The thickness of the adhesive layer is typically at least 10, 15, 20, or 25 microns (1 mil) ranging up to 500 microns (20 mils) thickness. In some embodiments, the thickness of the adhesive layer is no greater than 400, 300, 200, or 100 microns. The adhesive composition can be coated in single or multiple layers. The layers may be continuous or discontinuous.

The adhesive composition may be coated upon a variety of flexible and inflexible backing materials using conventional coating techniques to produce a single coated or double coated adhesive tape, and adhesive transfer tapes. Generally, adhesive transfer tapes comprise a layer of adhesive disposed on a release liner. Such products can be formed by applying (e.g., coating, casting, or extruding) the adhesive onto a release liner, and drying the adhesive if an organic solvent in present.

The tape may further comprise a release material or release liner. For example, in the case of a single-coated tape, the side of the backing surface opposite that where the adhesive is disposed is typically coated with a suitable release material. Release materials are known and include materials such as, for example, silicone, polyethylene, polycarbamate, polyacrylics, and the like. For double coated tapes, a second layer of adhesive is disposed on the opposing surface of the backing surface. The second layer may also comprises the adhesive composition as described herein or a different adhesive composition.

Flexible substrates are defined herein as any material which is conventionally utilized as a tape backing or may be of any other flexible material. Examples include, but are not limited to polymeric films, woven or nonwoven fabrics (e.g. scrim); metal foils, foams (e.g., polyacrylic, polyethylene, polyurethane, neoprene), and combinations thereof (e.g. metalized polymeric film). Polymeric film include for example polypropylene (e.g. biaxially oriented), polyethylene (e.g. high density or low density), polyvinyl chloride, polyurethane, polyester (polyethylene terephthalate), polycarbonate, polymethyl(meth)acrylate (PMMA), polyvinylbutyral, polyimide, polyamide, fluoropolymer, cellulose acetate, cellulose triacetate, and ethyl cellulose. The woven or nonwoven fabric may comprise fibers or filaments of synthetic or natural materials such as cellulose (e.g. tissue), cotton, nylon, rayon, glass, ceramic materials, and the like.

A substrate may be bonded by the adhesive composition or (e.g. transfer, single-sided, or double-coated tape described herein. The substrate may comprise the same materials as just described for the backing.

One method of bonding comprises providing a first substrate and contacting a surface of the first substrate with the (e.g. pressure sensitive) adhesive . In this embodiment, the opposing surface of the adhesive is typically temporarily covered by a release liner.

In other embodiments, the method further comprises contacting the opposing surface of the (e.g. pressure sensitive) adhesive (e.g. layer) to a second substrate. The first and second substrate may be comprised of various materials as previously described such as metal, an inorganic material (e.g. glass), an organic polymeric material, or a combination thereof.

In some methods of bonding, the substrate, (e.g. pressure sensitive) adhesive composition, or combination thereof may be heated to reduce the storage modulus (G') and thereby increase the bond strength formation. The substrate and/or (e.g. pressure sensitive) adhesive may be heated to a temperature up to 30, or 35, or 40, or 45, or 50, or 55, or 60, or 65 or 70°C. In some embodiments, the substrate(s) together with the adhesive bonded to the substrate(s) by means of the initial peel adhesion strength at ambient temperature (e.g. 25°C) is heated in an oven to the desired temperature. In other embodiments, the substrate and/or (e.g. pressure sensitive) adhesive is heated by means of a hot air gun.

In some embodiments, the (e.g. pressure sensitive) adhesive composition described herein is optically clear. Thus, certain articles can be laminates that include an optically clear substrate (e.g., an optical substrate such as an optical film) and an optically clear adhesive layer disposed on at least one major surface of the optically clear substrate. The laminates can further include a second substrate permanently or temporarily attached to the pressure-sensitive adhesive layer and with the pressure-sensitive adhesive layer being positioned between the optically clear substrate and the second substrate.

In one embodiment, the laminate may be a removable or permanent surface protection film. In some embodiments, the tapes and protective films can be utilized for (e.g. illuminated) displays that can be incorporated into household appliances, automobiles, computers (e.g. tablets), and various hand-held devices (e.g. phones). In other embodiments, the adhesive coated film may be suitable for architectural applications, glazing (e.g., windows and windshields), and graphic film applications.

In some embodiments, the (e.g. pressure sensitive) adhesive and optically clear substrate (e.g. transparent film) have a transmission as measured according to the test method described in the examples of visible light (410 nm) of at least 90 percent for a layer of adhesive having a thickness of 50 micrometers. In some embodiments, the transmission is at least 91, 92, 93, 94, 95, 96, 97, 98, or 99%.

In some example laminates in which an optically clear pressure-sensitive adhesive layer is positioned between two substrates, at least one of the substrates is an optical film, a display unit (e.g., liquid crystal displays (LCDs), organic light emitting displays (OLEDs),, a touch sensor, or a lens. Optical films intentionally enhance, manipulate, control, maintain, transmit, reflect, refract, absorb, retard, or otherwise alter light that impinges upon a surface of the optical film. Optical films included in the laminates include classes of material that have optical functions, such as polarizers, interference polarizers, reflective polarizers, diffusers, colored optical films, mirrors, louvered optical film, light control films, transparent sheets, brightness enhancement film, anti-glare, and anti-reflective films, and the like. Optical films for the provided laminates can also include retarder plates such as quarter-wave and half-wave phase retardation optical elements. Other optically clear films can include clear plastics (such as polyester, cyclic olefin copolymer, clear polyimide, polycarbonate, or polymethylmethacrylate), anti-splinter films, and electromagnetic interference filters. Some of these films may also be used as substrates for ITO (i.e., indium tin oxide) coating or patterning, such as use those used for the fabrication of touch sensors. The low water uptake and WVTR of the adhesives described herein provide a stable, low dielectric constant OCA which can be very advantageous for use in touch sensor applications, both to protect the sensor and integrating conductors from the environment and corrosion, and also to minimize electronic noise communication with the sensor.In some embodiments, the (e.g. pressure sensitive) adhesive and (e.g. transfer and double-coated) tapes described herein are suitable for bonding internal components or external components of an optical elements such as illuminated display devices such as liquid crystal displays ("LCDs") and light emitting diode ("LEDs") displays such as cell phones (including Smart phones), wearable (e.g. wrist) devices, car navigation systems, global positioning systems, depth finders, computer monitors, notebook and tablet computer displays. Other types of optical elements include projection (e.g. lens) components, photonic components, and polarizing beam splitters.

In some embodiments, the (e.g. pressure sensitive) adhesive is suitable for use as an encapsulating composition for use in an electronic device as described for example in US2009/0026924.

Specifically, the (e.g. pressure sensitive) adhesive can be used as a sealing member for electronic devices, for example, organic devices such as an organic transistor, an organic memory, and an organic EL element; liquid crystal displays; electronic paper; thin film transistors; electrochromic devices; electrochemical light-emitting devices; touch panels; solar batteries; thermoelectric conversion devices; piezoelectric conversion devices; electric storage devices; and the like.

In addition to various optics-related applications and/or electronic display assembly applications, the adhesive composition described herein can be used in a variety of other articles. The following, nonlimiting, examples further describe exemplary adhesives and adhesive articles of the present disclosure, as well as exemplary methods for making such adhesives and adhesive articles. All percents are by weight unless otherwise indicated.

**Materials**

| Designation | Description |
|---|---|
| PIB1 | An isobutene homopolymer having a weight average molecular weight (Mw) of 75000 grams/mole and a polydispersity index (Mw/Mn) of 5.0, available under the trade designation OPPANOL B15 from BASF Corporation, Florham Park, NJ. |
| PIB2 | A polybutene reported as having a number average molecular weight (Mn) of 950 grams/mole, available under the trade designation PB 950 from Dowpol Chemical, Shanghai, China. Determined to have a weight average molecular weight (Mw) of 1150 g/mole according to the GPC test method described below. |
| SIBS | A styrene-isobutylene-styrene triblock copolymer containing more than 95% of the copolymer and having a styrene content of about 23%, a melt flow rate of 6 grams/10 minutes at 230°C and 2.16 kilograms, available under the trade designation SIBSTAR 072T from Kaneka North America, LLC, Pasadena, TX. |
| E5340 | A cycloaliphatic hydrocarbon resin having a glass transition temperature (Tg) of 86°C and a weight average molecular weight (Mw) of 730 grams/mole, available under the trade designation ESCOREZ 5340 TACKIFYING RESIN from ExxonMobil, Houston, TX. |
| P125 | A hydrogenated hydrocarbon resin having a glass transition temperature (Tg) of 74°C and a number average molecular weight (Mn) of 1150 grams/mole, available under the trade designation ARKON P-125 from Arakawa Chemical Industries, Limited, Chicago, IL. |
| T928 | A UV absorber, 2-(2H-Benzotriazol-2-yl)-6-(1-methyl-1-phenylethyl)-4-(1,1,3,3-tetramethylbutyl)phenol, having a molecular weight of 442 grams/mole and a melting point of 109-113°C, available under the trade designation TINUVIN 928 from BASF Corporation, Florham Park, NJ. |
| Release Liner | A 51 micrometer thick polyester film having a silicone treatment on one side, available under the trade designation RF 22N from SKC Haas, Seoul, Korea. |

Water Vapor Transmission Rate (WVTR) Water vapor transmission rates (WVTR) of various adhesive compositions were evaluated generally according to ASTM F-1249: "Standard Test Method for Water Vapor Transmission Rate Through Plastic Film and Sheeting Using a Modulated Infrared Sensor" using a PERMATRAN W Model 700 WVTR Transmission Rate Test System (Mocon Incorporated, Minneapolis, MN) at the following test conditions: 40°C; 100% relative humidity (RH); and with 50 square centimeter sample area. Samples were prepared by using an adhesive transfer tape of an adhesive composition to prepare a sandwich of the adhesive composition between two pieces of porous polypropylene films (Example 2 of US 5,238,623). This sandwich structure was then tested for their water vapor transmission rate over a period of 26 hours including a 2 hours conditioning period to start. Measurements were made every hour after conditioning. Values of less than 6 grams/square meter/day (g/sq.m/day) are desirable.

Creep Compliance (J) Adhesive polymeric film samples were evaluated for their creep compliance (J) at 25°C using a rheological dynamic analyzer (Model DHR-3 Rheometer, TA Instruments, New Castle, DE) equipped with a Peltier Plate heating fixture. Adhesive transfer tapes were used to provide a stack of adhesive composition having a thickness of approximately 1 millimeter (0.039 inches). Samples were then punched out using an 8 millimeter (0.315 inches) diameter circular die, and adhered onto an 8 millimeter diameter upper parallel plate after removal of the first release liner. After removal of the second release liner, the plate with adhesive composition adhered to it was positioned over and onto the Peltier Plate in the rheometer with the exposed adhesive sample surface contacting the Peltier Plate, and the adhesive compressed until the edges of the sample were uniform with the edges of the top plate. The temperature was then equilibrated at 25°C for 2 minutes at a nominal axial force of 0 grams +/- 15 grams. After two minutes, the axial force controller was disabled in order to maintain a fixed gap during the remainder of the test. A stress of 8,000 Pascals was applied to the sample for 300 seconds, and the creep compliance (J) at 287 seconds was recorded. Values of less than 1.5 E-04 (1/Pascals) are desirable.

UV Transmittance The UV transmittance of an adhesive composition was measured using a Model CARY 100 UV-VIS SPECTROPHOTOMETER (Agilent Technologies, Incorporated, Santa Clara, CA) over a wavelength range of 300 to 420 nanometers. Adhesive compositions, having a thickness of 0.002 incches (51 micrometers), in the form of adhesive transfer tapes (ATT) were applied to an LCD substrate as follows. The first release liner of the ATT was removed and the exposed adhesive surface was applied to the surface of a LCD glass substrate measuring approximately 2 inches by 3 inches by 0.03 inches (50 millimeters by 75 millimeters by 0.7 millimeters) using four passes of a small rubber hand roller to ensure intimate contact between the substrate and adhesive, ie., free of visible voids, particles, scratches, and blemishes. The glass substrate was an alkaline earth boro-aluminosilicate glass (Part Number EXG-50X75/0.7, Delta Technologies, Limited. Loveland, CO) and had been previously cleaned three times with lint free tissue and heptane, then dried with lint free tissue. The adhesive composition covered the entire surface of the glass substrate. After removing the second release line from the ATT the adhesive / glass substrate was then placed in the holder of the spectrophotometer and scanned from 300 to 420 nanometers. A control of the glass substrate without adhesive was also run. The difference between the control and the adhesive coated glass was then recorded. The %transmittance at 380, 385, and 410 nanometers was recorded. At 380 and 385 nanometers values of less than 20% transmittance are desirable. At 410 nanometers values of greater than 90% transmittance are desirable.

Color Samples were prepared as described for UV Transmittance and evaluated for b* with visible light (wavelength range of 400-700nm) using a Model 4500L MiniScan EZ Spectrophotometer (Hunter Associates Laboratory, Incorporated, Reston, VA). The b* parameter was selected because it is a measure of the blue-yellow as defined in the CIE (International Commission on Illumination) 1976 Color Space. Values of less than 2 are desirable.

### Peel Adhesion Strength

Peel adhesion strength was measured at an angle of 180° using an IMASS SP-200 slip/peel tester (available from IMASS, Incorporated, Accord, MA) at a peel rate of 305 millimeters/minute (12 inches/minute). Stainless steel test panels measuring 25.4 centimeters by 12.7 centimeters (10 inches by 5 inches) were cleaned by wiping them with isopropanol using a lint-free tissue and allowing them to air dry for 30 minutes after which they were clamped to the test stage of the peel tester. Tape samples measuring approximately 1.3 centimeters by 20 centimeters (0.5 inches by 8 inches) were then applied to the cleaned test panels with the adhesive side in contact with the test panel. The tape samples were then rolled over using a 2.0 kilogram (4.5 pound) rubber roller one time in each direction. The taped panels were stored and tested at 23°C and 50% relative humidity (RH). Testing was conducted between 1 and 8 hours after preparation. Three to five taped panels were evaluated and the average peel adhesion strength of the total number of panel tested was reported. Results were obtained in ounces/inch and converted to Newtons/decimeter (N/dm). In addition, it was noted if any adhesive residue remained on the stainless steel panel after removal of the tape sample.

### Gel Permeation Chromatography (GPC)

A polyisobutylene polymer, PIB2, was evaluated for its' weight average molecular weight (Mw) using gel permeation chromatography (GPC). The polymer was dissolved in tetrahydrofuran (THF) at a concentration of 0.5 percent (weight/volume) and passed through a 0.2 micrometer polytetrafluoroethylene filter. Samples of the resulting solution were analyzed using a GPC unit equipped with two PLgel 5 micrometer MIXED-D columns (Styragel HR5E 7.8 mm x 300 mm) at 35°C and UV (Model 2487) and Refractive Index (Model 2410) detectors (all obtained from Waters Corporation, Milford, MA). After injection samples were eluted with THF at 1 milliliter/minute. Calibration was carried out using polystyrene standards. The weight average molecular weight (Mw) was determined and reported in grams/mole.

### Storage Modulus and Tg as determined bv Dynamic Mechanical Analysis

Dynamic mechanical analysis ("DMA") of adhesive samples was carried out using a rheometer (obtained from TA Instruments, New Castle, DE, under the trade designation "AR2000 PARALLEL PLATE

RHEOMETER") to characterize the physical properties of each sample as a function of temperature. For each sample, 50 micrometer thick sheets of the polymerized adhesive sample were laminated together to achieve a 1 mm thick slab. A circular punch with a diameter of 8 mm was used to cut a sample from this slab which was then centered between the 8 mm diameter parallel plates of the rheometer. The temperature was then scanned from -40°C to 120°C at a rate of 3°C/min. while the parallel plates were oscillated at a frequency of 1 Hz and a constant strain of 0.4%. Physical parameters of the material were recorded during the temperature ramp, including storage modulus (G') and glass transition temperature (Tg).

Tg values are the temperature at which the tan delta values maximize.

### Comparative Example 1 (CE 1) - Weight Ratio of SIBS to PIB is 2:1

To a glass vial were added 20.8 parts by weight (pbw) of PIB1, 41.7 pbw of SIBS, 37.5 pbw of P125, and 1 part of T928 per one hundred parts by weight (pph) adhesive (PIB1, SIBS, P125), and sufficient toluene to provide a 40% solids (by weight) composition. The vial was sealed and placed on a roller overnight. The resulting solution was then coated on the silicone treated side of a Release Liner using a knife coater having a gap setting of 0.008 inches (203 micrometers) greater than the Release Liner thickness. The coated liner was dried in an oven at 70°C for 15 minutes. An adhesive transfer tape was obtained having an adhesive composition of SIBS:PIB1:P125 / 42:21:37 (w:w:w) containing 1 pbw of T928 per one hundred parts by weight (pph) adhesive. The adhesive composition was evaluated for water vapor transmission rate, creep compliance, UV transmittance, b*, and peel adhesion strength as described in the test methods above. The results are shown in Tables 1 and 2 below.

### Comparative Example 2 (CE 2) - No SIBS

Comparative Example 2 was prepared as described for Comparative Example 1 with the following modifications. The materials and amounts used were 80 pbw of PIB1, 20 pbw of E5340, and 4 pbw of T928. An adhesive transfer tape was obtained having an adhesive composition of PIB1:E5340 / 80:20 (w:w) containing 4 pbw of T928 per one hundred parts by weight (pph) adhesive. The adhesive composition was evaluated for water vapor transmission rate, creep compliance, UV transmittance, b*, and peel adhesion strength as described in the test methods above. The results are shown in Tables 1 and 2 below.

### Comparative Example 3 (CE 3) - No PIB

Comparative Example 3 was prepared as described for Comparative Example 1 with the following modifications. The materials and amounts used were 80 pbw of SIBS, 20 pbw of E5340, and 5 pbw of T928. An adhesive transfer tape was obtained having an adhesive composition of SIBS:E5340 / 80:20 (w:w) containing 5 pbw of T928 per one hundred parts by weight (pph) adhesive. The adhesive composition was evaluated for water vapor transmission rate, creep compliance, UV transmittance, b*, and peel adhesion strength as described in the test methods above. The results are shown in Tables 1 and 2 below.

### Comparative Example 4 (CE 4)

Comparative Example 4 was prepared as described for Comparative Example 1 with the following modification. No T928 was used. The adhesive composition was evaluated for water vapor transmission, creep compliance, UV transmittance, b*, and peel adhesion strength as described in the test methods above. The results are shown in Tables 1 and 2 below.

### Comparative Example 5 (CE 5)

Comparative Example 5 was prepared as described for Comparative Example 2 with the following modification. No T928 was used. The adhesive composition was evaluated for water vapor transmission rate, creep compliance, UV transmittance, b*, and peel adhesion strength as described in the test methods above. The results are shown in Tables 1 and 2 below.

### Example 1

Example 1 was prepared as described for Comparative Example 1 with the following modifications. The materials and amounts used were 20 pbw PIB1, 60 pbw of SIBS, 20 pbw of E5340, and 5 pbw of T928. An adhesive transfer tape was obtained having an adhesive composition of SIBS:PIB1:E5340 / 60:20:20 (w:w:w) containing 5 pbw of T928 per one hundred parts by weight (pph) adhesive. The weight ratio of SIBS to PIB was 3:1. The adhesive composition was evaluated for water vapor transmission rate, creep compliance, UV transmittance, b*, and peel adhesion strength as described in the test methods above. The results are shown in Tables 1 and 2 below.

### Example 2

Example 2 was prepared as described for Comparative Example 1 with the following modifications. The materials and amounts used were 20 pbw of PIB1, 60 pbw of SIBS, and 20 pbw of E5340. The adhesive composition was evaluated for water vapor transmission rate, creep compliance, UV transmittance, b*, and peel adhesion strength as described in the test methods above. The results are shown in Tables 1 and 2 below.

### Example 3

Example 3 was prepared as described for Comparative Example 1 with the following modifications. The materials and amounts used were 16 pbw of PIB1, 64 pbw of SIBS, and 20 pbw of E5340. The adhesive composition was evaluated for water vapor transmission rate, creep compliance, UV transmittance, b*, and peel adhesion strength as described in the test methods above. The results are shown in Tables 1 and 2 below.

**Table 1**

| Example | SIBS:PIB1 Wt. ratio | WVTR at 40°C/100 RH (g/sq.m/day) | Creep Compliance (1/Pascal) | Peel Adhesion Strength oz/in (N/dm) | Tg (°C) | G' at 25°C (Pa) |
|---|---|---|---|---|---|---|
| 1 | 3:1 | 6.8 | 6.83 E-05 | 7.3 (8.0) | 12 | 2.91 E05 |
| 2 | 3:1 | 6.7 | 6.83 E-05 | 7.1 (7.8) | 5 | 2.76 E05 |
| 3 | 4:1 | 7.0 | 4.54 E-05 | 6.5 (7.1) | 12 | 2.82 E05 |
| CE 1 | 2:1 | 7.7 | 2.48 E-04 | 8.2 (9.0) | 12 | 2.70 E05 |
| CE 2 | 0:1 | 43 | 1.48 E-03 | 5.5 (6.0) | -14 | 0.48 E05 |
| CE 3 | 1:0 | 23 | 1.64 E-05 | 2.7 (3.0) | -12 | 3.20 E05 |
| CE 4 | 2:1 | 7.7 | 2.48 E-04 | 7.8 (8.5) | 12 | 2.68 E05 |
| CE 5 | 0:1 | 43 | 1.48 E-03 | 4.9 (5.4) | -14 | 0.51 E05 |

**Table 2**

| Example | SIBS:PIB1 Wt. ratio | Color b* | % Transmission (410 nm) | % Transmission (385 nm) | % Transmission (380 nm) |
|---|---|---|---|---|---|
| 1 | 3:1 | 0.51 | 94.7 | 1.48 | 0.29 |
| 2 | 3:1 | 0.23 | 99.3 | ND | ND |
| 3 | 4:1 | 0.22 | 99.2 | ND | ND |
| CE 1 | 2:1 | 0.21 | 98.2 | 42.5 | 23.38 |
| CE 2 | 0:1 | 0.42 | 96 | 10.8 | 2.2 |
| CE 3 | 1:0 | 0.50 | 94.9 | 2.17 | 0.37 |
| CE 4 | 2:1 | 0.19 | 99.1 | ND | ND |
| CE 5 | 0:1 | 0.20 | 99.2 | ND | ND |

| | | | | | |
|---|---|---|---|---|---|
| ND: not determined | | | | | |

### Example 4

Example 4 can be prepared as described for Comparative Example 1 with the following modifications. The materials and amounts used were 7.5 pbw of PIB1, 75 pbw of SIBS, and 17.5 pbw of PIB2. The adhesive composition can be evaluated using the previously described test methods.

## Claims

1. An adhesive composition comprising
a polyisobutylene polymer component having an average weight average molecular weight ranging from 15,000 g/mole to 300,000 g/mole based on Gel Permeation Chromatography (GPC) utilizing polystyrene standards;
a styrene-isobutylene block copolymer component; and
wherein the weight ratio of styrene-isobutylene block copolymer to polyisobutylene polymer of the adhesive composition is greater than 2.2:1.

2. The adhesive composition of claim 1 wherein the polyisobutylene polymer component comprises at least 50 wt.-% of polymerized units of polyisobutylene and optionally polymerized units derived from 1-butene and 2-butene.

3. The adhesive composition of claims 1-2 wherein the polyisobutylene polymer component comprises one or more polyisobutylene polymers having a weight average molecular weight ranging from 15,000 g/mole to 300,000 g/mole.

4. The adhesive composition of claim 3 wherein the one or more polyisobutylene polymers have a weight average molecular weight, of at least 50,000 g/mole.

5. The adhesive composition of claims 3-4 wherein the one or more polyisobutylene polymers have a weight average molecular weight no greater than 150,000 g/mole.

6. The adhesive composition of claims 1-5 wherein the polyisobutylene polymer comprises one or more polymers having a weight average molecular weight less than 15,000 g/mole.

7. The adhesive composition of claims 1-6 wherein the adhesive comprises 5 wt.-% to 40 wt.-% of polyisobutylene polymer.

8. The adhesive composition of claims 1-7 wherein the adhesive comprises 10 wt.-% to 95 wt.-% of styrene-isobutylene-styrene block copolymer (SIBS).

9. The adhesive composition of claims 1-8 wherein the adhesive further comprises additives an amount up to 60 wt.-%.

10. The adhesive composition of claim 9 wherein the additive comprises tackifier.

11. The adhesive composition of claims 1-10 wherein the adhesive comprises an ultraviolet blocking agent and the adhesive at a thickness of 51 microns has a transmission of less than 20% at 385 nm.

12. The adhesive composition of claims 1-11 wherein the adhesive has a water vapor transmission rate of less than 20 g/m² day at 40°C and 100% relative humidity and/or has a creep compliance ranging from 1 X 10⁻⁸ 1/Pa to 1.5 X 10⁻⁴ 1/Pa at 25°C, measured 287 seconds after a stress of 8,000 Pa was applied for 5 minutes.

13. The adhesive composition of claims 1-12 wherein the adhesive is a pressure sensitive adhesive having a storage modulus G' of less than 0.3 MPa at 25°C and 1 hertz and/or an initial peel adhesion of 0.1N/dm.

14. An article comprising:
a release liner; and
a layer of the adhesive composition of claims 1-13 disposed on the liner.

15. The adhesive composition of claims 1-13 for use in an electronic device.

## Patentansprüche

1. Eine Klebstoffzusammensetzung, umfassend:
eine Polyisobutylenpolymerkomponente mit einem durchschnittlichen gewichtsmittleren Molekulargewicht im Bereich von 15.000 g/mol bis 300.000 g/mol, basierend auf Gelpermeationschromatographie (GPC) unter Verwendung von Polystyrolstandards;
eine Styrol-Isobutylen-Blockcopolymerkomponente; und
wobei das Gewichtsverhältnis von Styrol-Isobutylen-Blockcopolymer zu Polyisobutylenpolymer der Klebstoffzusammensetzung größer als 2,2:1 ist.

2. Die Klebstoffzusammensetzung nach Anspruch 1, wobei die Polyisobutylenpolymerkomponente mindestens 50 Gew.-% polymerisierte Einheiten von Polyisobutylen und gegebenenfalls polymerisierte Einheiten, die von 1-Buten und 2-Buten abgeleitet sind, umfasst.

3. Die Klebstoffzusammensetzung nach den Ansprüchen 1-2, wobei die Polyisobutylen-Polymerkomponente ein oder mehrere Polyisobutylen-Polymere mit einem gewichtsmittleren Molekulargewicht im Bereich von 15.000 g/mol bis 300.000 g/mol umfasst.

4. Die Klebstoffzusammensetzung nach Anspruch 3, wobei das eine oder die mehreren Polyisobutylenpolymere ein gewichtsmittleres Molekulargewicht von mindestens 50.000 g/Mol aufweisen.

5. Die Klebstoffzusammensetzung nach den Ansprüchen 3-4, wobei das eine oder die mehreren Polyisobutylenpolymere ein gewichtsmittleres Molekulargewicht von höchstens 150.000 g/Mol aufweisen.

6. Die Klebstoffzusammensetzung nach den Ansprüchen 1-5, wobei das Polyisobutylenpolymer ein oder mehrere Polymere mit einem gewichtsmittleren Molekulargewicht von weniger als 15.000 g/Mol umfasst.

7. Die Klebstoffzusammensetzung nach den Ansprüchen 1-6, wobei der Klebstoff 5 Gew.-% bis 40 Gew.-% Polyisobutylenpolymer umfasst.

8. Die Klebstoffzusammensetzung nach den Ansprüchen 1-7, wobei der Klebstoff 10 Gew.-% bis 95 Gew.-% Styrol-Isobutylen-Styrol-Blockcopolymer (SIBS) umfasst.

9. Die Klebstoffzusammensetzung nach den Ansprüchen 1-8, wobei der Klebstoff ferner Additive in einer Menge von bis zu 60 Gew.-% umfasst.

10. Die Klebstoffzusammensetzung nach Anspruch 9, wobei das Additiv einen Klebrigmacher umfasst.

11. Die Klebstoffzusammensetzung nach den Ansprüchen 1-10, wobei der Klebstoff ein Ultraviolettblockierungsmittel umfasst und der Klebstoff in einer Dicke von 51 Mikrometern eine Transmission von weniger als 20 % bei 385 nm aufweist.

12. Die Klebstoffzusammensetzung nach den Ansprüchen 1-11, wobei der Klebstoff eine Wasserdampfdurchlässigkeitsrate von weniger als 20 g/m² pro Tag bei 40 °C und 100 % relativer Feuchtigkeit aufweist und/oder eine Kriechsteifigkeit im Bereich von 1 x 10⁻⁸ 1/Pa bis 1,5 x 10⁻⁴ 1/Pa bei 25 °C aufweist, gemessen 287 Sekunden, nachdem eine Belastung von 8.000 Pa für 5 Minuten angewendet wurde.

13. Die Klebstoffzusammensetzung nach den Ansprüchen 1-12, wobei der Klebstoff ein Haftklebstoff mit einem Speichermodul G' von weniger als 0,3 MPa bei 25 °C und 1 Hertz und/oder einer anfänglichen Schälfestigkeit von 0,1 N/dm ist.

14. Ein Artikel, umfassend:
eine Abziehfolie, und
eine Schicht der Klebstoffzusammensetzung nach den Ansprüchen 1-13, die auf der Abziehfolie angeordnet ist.

15. Die Klebstoffzusammensetzung nach den Ansprüchen 1-13 zur Verwendung in einer elektronischen Vorrichtung.

## Revendications

1. Composition adhésive comprenant
un composant polymère polyisobutylène ayant une masse moléculaire moyenne en poids moyen allant de 15 000 g/mole à 300 000 g/mole sur la base d'une chromatographie par perméation sur gel (GPC) en utilisant des étalons en polystyrène ;
un composant copolymère séquencé styrène-isobutylène ; et
dans laquelle le rapport pondéral du copolymère séquencé styrène-isobutylène au polymère polyisobutylène de la composition adhésive est supérieur à 2,2:1.

2. Composition adhésive selon la revendication 1 dans laquelle le composant polymère polyisobutylène comprend au moins 50 % en poids de motifs polymérisés de polyisobutylène et facultativement des motifs polymérisés dérivés de 1-butène et de 2-butène.

3. Composition adhésive selon les revendications 1 ou 2 dans laquelle le composant polymère polyisobutylène comprend un ou plusieurs polymères polyisobutylène ayant une masse moléculaire moyenne en poids allant de 15 000 g/mole à 300 000 g/mole.

4. Composition adhésive selon la revendication 3 dans laquelle le ou les polymères polyisobutylène ont une masse moléculaire moyenne en poids, d'au moins 50 000 g/mole.

5. Composition adhésive selon les revendications 3 ou 4 dans laquelle le ou les polymères polyisobutylène ont une masse moléculaire moyenne en poids n'excédant pas 150 000 g/mole.

6. Composition adhésive selon les revendications 1 à 5 dans laquelle le polymère polyisobutylène comprend un ou plusieurs polymères ayant une masse moléculaire moyenne en poids inférieure à 15 000 g/mole.

7. Composition adhésive selon les revendications 1 à 6 dans laquelle l'adhésif comprend 5 % en poids à 40 % en poids de polymère polyisobutylène.

8. Composition adhésive selon les revendications 1 à 7 dans laquelle l'adhésif comprend 10 % en poids à 95 % en poids de copolymère séquencé styrène-isobutylène-styrène (SIBS).

9. Composition adhésive selon les revendications 1 à 8 dans laquelle l'adhésif comprend en outre des additifs en une quantité jusqu'à 60 % en poids.

10. Composition adhésive selon la revendication 9 dans laquelle l'additif comprend un agent collant.

11. Composition adhésive selon les revendications 1 à 10 dans laquelle l'adhésif comprend un agent bloquant les ultraviolets et l'adhésif à une épaisseur de 51 micromètres a une transmission inférieure à 20 % à 385 nm.

12. Composition adhésive selon les revendications 1 à 11 dans laquelle l'adhésif a un taux de transmission de vapeur d'eau inférieur à 20 g/m² jour à 40 °C et 100 % d'humidité relative et/ou a un comportement au fluage allant de 1 X 10⁻⁸ 1/Pa à 1,5 X 10⁻⁴ 1/Pa à 25 °C, mesuré 287 secondes après qu'une contrainte de 8000 Pa a été appliquée pendant 5 minutes.

13. Composition adhésive selon les revendications 1 à 12 dans laquelle l'adhésif est un adhésif sensible à la pression ayant un module de conservation G' inférieur à 0,3 MPa à 25 °C et 1 hertz et/ou une adhérence au pelage initiale de 0,1 N/dm.

14. Article comprenant :
une protection détachable ; et
une couche de la composition adhésive selon les revendications 1 à 13 disposée sur la protection.

15. Composition adhésive selon les revendications 1 à 13 pour utilisation dans un dispositif électronique.
